# EUROPEAN PATENT SPECIFICATION

(11) **EP 2 733 056 B1**
(45) Date of publication and mention of the grant of the patent: **29.03.2017**
(21) Application number: 13193311.1
(22) Date of filing: 18.11.2013
(51) Int. Cl.: B62K 19/34

(54) **Mid-axle positioning mechanism and bicycle mid-axle structure**
Mittelachsen-Positionierungsmechanismus und Fahrradmittelachsenstruktur
Mécanisme de positionnement au milieu de l'essieu et structure de milieu d'essieu de bicyclette

(30) Priority: 19.11.2012 TW 101222405
(43) Date of publication of application: 21.05.2014
(73) Proprietor: J.D Components Co., Ltd., Shou Shui Hsiang, Chang Hua Hsien (TW)
(72) Inventor: Hsu, Yuan-Fang, 300 Hsinchu City (TW)
(74) Representative: Becker Kurig Straus

(56) References cited:
- EP-A1- 2 460 718
- WO-A2-2005/058682
- US-A1- 2007 095 164
- US-A1- 2008 054 140

## Description

### BACKGROUND OF THE INVENTION

### 1. Technical Field

The present invention relates to a mid-axle positioning mechanism and a bicycle mid-axle structure with the mid-axle positioning mechanism for achieving stepless angular adjustment of an internal sleeve.

### 2. Description of Related Art

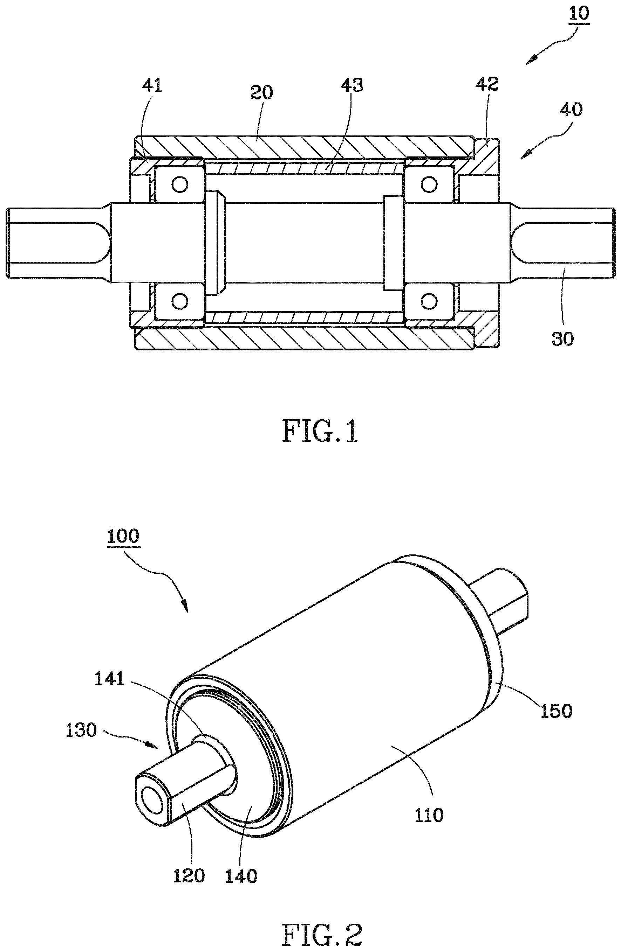

Referring to FIG. 1, a conventional bicycle mid-axle structure 10 comprises a bottom bracket 20, a crank spindle 30, and an internally-positioned mid-axle positioning mechanism 40. The mid-axle positioning mechanism 40 enables the crank spindle 30 to be rotatably positioned inside the bottom bracket 20. The mid-axle positioning mechanism 40 comprises a first mount 41, a second mount 42, and a sleeve 43. In general, the mid-axle positioning mechanism 40 is installed by the following the steps: screwing the second mount 42 to one end of the bottom bracket 20; placing the sleeve 43 in the bottom bracket 20; and screwing the first mount 41 to the other end of the bottom bracket 20 such that the sleeve 43 is clamped by and between the first and second mounts 41, 42.

During the process of installing the mid-axle positioning mechanism 40, it is necessary to prevent the sleeve 43 from rotating because components (such as a signal sensor) disposed inside the sleeve 43 must correspond in position to components of the crank spindle 30, respectively, or the sleeve 43 must be installed at an angle relative to the bottom bracket 20 to facilitate path layout and avoid path entanglement.

However, during the process of screwing the first mount 41 to the bottom bracket 20, the first mount 41 abuts against the sleeve 43 and thus produces friction (hereinafter referred to as friction A); as a result, during its installation process, the first mount 41 often causes the sleeve 43 to rotate together with the first mount 41, thereby undesirably preventing the sleeve 43 from being positioned at a predetermined angle. In another aspect, although the second mount 42 abuts against the sleeve 43 and produces friction (hereinafter referred to as friction B) as well, friction A is roughly equal to friction B; hence, any attempt to prevent the rotation of the sleeve 43 proves futile.

To meet the aforesaid positioning requirement, Taiwan Patent No. TW 201144134 discloses: positioning protruding portions flank a sleeve; and the positioning protruding portions are coupled to positioning denting portions of left and right mounts to restrict rotation of the sleeve. However, TW 201144134 has the following disadvantages: it requires a relatively large number of parts and components and thus renders installation intricate; the installation angle of the sleeve cannot be fine-tuned; referring to the FIG. 2A of the aforesaid patent, the positioning protruding portions are in the number of two, and thus the adjustable installation angle of the sleeve must be 180°; to reduce the adjustable installation angle of the sleeve, it is feasible to increase the quantity of the positioning protruding portions, for example, increasing the number of the positioning protruding portions to 12, such that the adjustable installation angle of the sleeve is reduced to 30°. A disadvantage of TW 201144134 is that it fails to achieve gradual angular adjustment (hereinafter referred to as stepless angular adjustment), regardless of how large the increase in the quantity of the positioning protruding portions is.

FIG. 3 and FIG. 6 of China Patent No. CN 1250157A disclose: the inner end surface of a contact portion of a right cylindrical component is embossed to form stellate positioning groove portions , whereas a bearing sleeve forms positioning groove portions accordingly, such that the positioning groove portions restrict the rotation of the bearing sleeve. Similarly, CN 1250157A fails to achieve stepless angular adjustment of the bearing sleeve but reduces an adjustable unit to a small at most.

The closest prior art document WO2005058682 discloses a mid-axle positioning mechanism in accordance with the preamble of claim 1.

Further preferred embodiments of the invention are disclosed in the dependent claims 2 to 6.

### BRIEF SUMMARY OF THE INVENTION

In view of the aforesaid drawbacks of the prior art, it is an objective of the present invention to provide a mid-axle positioning mechanism and a bicycle mid-axle structure which are effective in achieving stepless angular adjustment of a sleeve.

Another objective of the present invention is to provide a mid-axle positioning mechanism and a bicycle mid-axle structure which are effective in positioning a sleeve.

In order to achieve the above and other objectives, the present invention provides a mid-axle positioning mechanism disposed at a bottom bracket and rotatably supporting a crank spindle. The mid-axle positioning mechanism comprises a first mount, a second mount, and a sleeve. The first and second mounts flank the bottom bracket. The first and second mounts have first and second through holes for insertion of the crank spindle and have first and second free ends, respectively. The second free end tapers and has a first annular oblique surface. The sleeve is disposed inside the bottom bracket and sleeved onto the crank spindle. The sleeve has a first end portion and a second end portion. The second end portion tapers and has a second annular oblique surface complementing the first annular oblique surface. The first end portion abuts against the first free end. The second annular oblique surface abuts against the first annular oblique surface.

In order to achieve the above and other objectives, the present invention further provides a bicycle mid-axle structure which comprises a bottom bracket, a crank spindle, a mid-axle positioning mechanism, a first bearing, and a second bearing. The bottom bracket has a first lateral opening and a second lateral opening. The crank spindle rotatably penetrates the bottom bracket. The mid-axle positioning mechanism is disposed at the bottom bracket and rotatably supports the crank spindle. The mid-axle positioning mechanism comprises a first mount, a second mount, and a sleeve. The first and second mounts flank the bottom bracket. The first and second mounts have first and second through holes penetrable by the crank spindle, respectively, and have first and second free ends, respectively. The second free end tapers and has a first annular oblique surface. The sleeve is disposed inside the bottom bracket and sleeved onto the crank spindle. The sleeve has a first end portion and a second end portion. The second end portion tapers and has a second annular oblique surface complementing the first annular oblique surface. The first end portion abuts against the first free end. The second annular oblique surface abuts against the first annular oblique surface. The first and second bearings are disposed between the crank spindle and the first and second mounts, respectively.

The present invention is characterized in that: the free end of the second mount and the second end portion of the sleeve have complementary first and second annular oblique surfaces, respectively, which abut against each other during an installation process to thereby increase friction between the sleeve and the second mount; during the subsequent process of screwing the first mount by the user, friction between the first mount and the sleeve is too small to drive the sleeve to rotate relative to the second mount, thereby ensuring that the sleeve can stay at a predetermined angle; before installing the first mount, the user can adjust the sleeve to any intended angle with a view to fine-tuning the installation angle of the sleeve; hence, the user can perform stepless adjustment of the installation angle of the sleeve to thereby enhance the ease of installation greatly.

### BRIEF DESCRIPTION OF THE SEVERAL VIEWS OF THE DRAWINGS

FIG. 1 (prior art) is a partial cross-sectional view of a conventional bicycle mid-axle structure, wherein a crank spindle is not shown by a cross-section;
FIG. 2 is a perspective view of a bicycle mid-axle structure according to a preferred embodiment of the present invention;
FIG. 3 is a cross-sectional view of the bicycle mid-axle structure according to the preferred embodiment of the present invention, wherein the crank spindle is not shown by a cross-section; and
FIG. 4 is a partial enlarged view of FIG. 3.

### DETAILED DESCRIPTION OF THE INVENTION

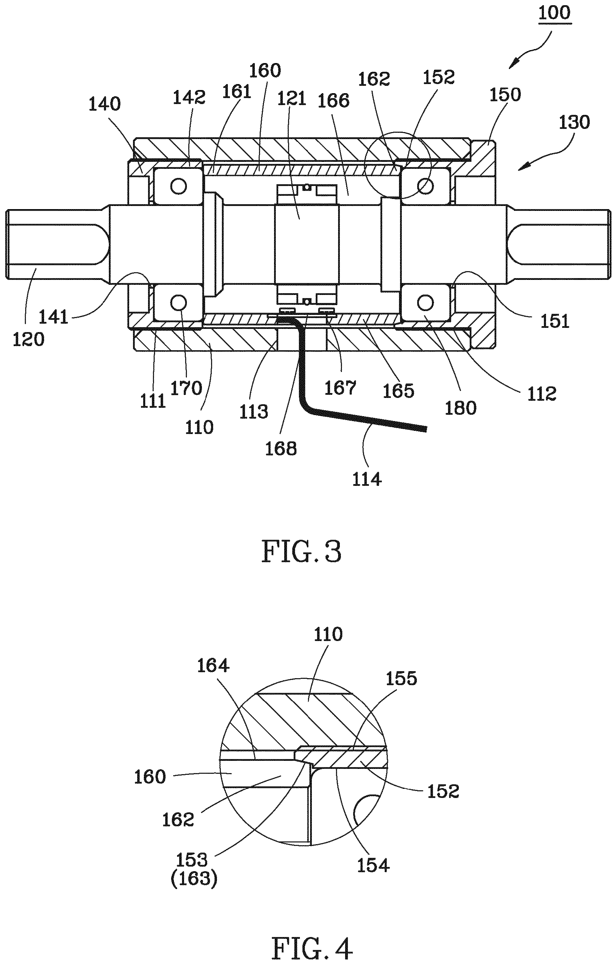

Referring to FIGs. 2, 3, in a preferred embodiment of the present invention, a bicycle mid-axle structure 100 comprises a bottom bracket 110, a crank spindle 120, a mid-axle positioning mechanism 130, a first bearing 170, and a second bearing 180.

In general, the bottom bracket 110 is positioned at the junction of the down tube, the seat tube, and the chain stay of the bicycle frame, and has a first lateral opening 111 and a second lateral opening 112.

The crank spindle 120 rotatably penetrates the bottom bracket 110, such that the two ends of the crank spindle 120 protrude from the first and second lateral openings 111, 112 and are connected with two cranks, respectively.

The mid-axle positioning mechanism 130 is disposed at the bottom bracket 110 and rotatably supports the crank spindle 120. The mid-axle positioning mechanism 130 comprises a first mount 140, a second mount 150, and a sleeve 160.

The first mount 140 is disposed at the first lateral opening 111 of the bottom bracket 110, and they are coupled together by a screwing means. The first mount 140 has a first through hole 141 penetrable by the crank spindle 120 and a first free end 142.

Referring to FIG. 4, the second mount 150 is disposed at the second lateral opening 112 of the bottom bracket 110, and they are coupled together by a screwing means. The second mount 150 has a second through hole 151 penetrable by the crank spindle 120 and a second free end 152. The second free end 152 tapers and has a first annular oblique surface 153, an inner surface 154, and an outer surface 155. The first annular oblique surface 153 not only connects with the inner surface 154 of the second mount 150 but also tapers and extends in the direction away from the axis of the second mount 150. The first annular oblique surface 153 has a taper angle of 15° to 30°, but the present invention is not limited thereto. The outer surface 155 has a thread portion.

The sleeve 160 is disposed inside the bottom bracket 110 and sleeved onto the crank spindle 120. The sleeve 160 has a first end portion 161 and a second end portion 162. The second end portion 162 tapers and has a second annular oblique surface 163 complementing the first annular oblique surface 153 and an outer surface 164. The second annular oblique surface 163 not only connects with the outer surface 164 but also tapers and extends in the direction of the axis of the sleeve 160. The first end portion 161 abuts against the first free end 142. The second annular oblique surface 163 abuts against the first annular oblique surface 153.

The first and second bearings 170, 180 are disposed between the crank spindle 120 and the first and second mounts 140, 150, respectively.

The installation process is described below. A user screws the second mount 150 to the second lateral opening 112 of the bottom bracket 110, and then sleeves the second bearing 180, the sleeve 160, and the crank spindle 120 in the second mount 150; at this point in time, the user can perform stepless adjustment of the sleeve 160 until the predetermined angle of the sleeve 160 is attained. Afterward, the user sleeves the first bearing 170 to the sleeve 160, and then screws the first mount 140 to the first lateral opening 111 of the bottom bracket 110. As the first and second annular oblique surfaces 153, 163 abut against each other, there is relatively great friction between the second mount 150 and the sleeve 160; hence, the sleeve 160 does not rotate together with the first mount 140 in the course of the screwing of the first mount 140, thereby achieving preferred effect of the positioning of the sleeve 160.

To meet the needs of installing other electronic parts and components, components, such as a signal generator 121 (ex: a strain gauge) and a circuit board, are disposed on the surface of the crank spindle 120. An annular wall surface 165 of the sleeve 160 defines a receiving space 166 for receiving the crank spindle 120 and the signal generator 121. The annular wall surface 165 has a via hole 167 in communication with the receiving space 166 and the outside (i.e., the space outside the sleeve 160), such that a signal sensor 168 can be installed at the via hole 167. The bottom bracket 110 has a penetration hole 113 corresponding in position to the via hole 167. A signal lead wire 114 passes through the penetration hole 113 and the via hole 167 to connect with the signal sensor 168, such that a signal can be sent to a control system installed at another location on the bicycle.

In the aforesaid preferred embodiment, the first annular oblique surface 153 is disposed outside the second annular oblique surface 163 and roughly covers the second end portion 162 of the sleeve 160. However, in any other possible embodiments of the present invention, both the second end portion of the sleeve and the second free end of the second mount are subject to slight structural changes to thereby allow the first annular oblique surface to be disposed on the inward side of the second annular oblique surface and keep the first and second annular oblique surfaces abutting against each other. That is to say, the direction in which the first and second annular oblique surfaces in the possible embodiments of the present invention taper can be opposite to the direction in which the first and second annular oblique surfaces in the preferred embodiments of the present invention taper and is still effective in achieving stepless angular adjustment of a sleeve.

Constituent elements of the present invention are disclosed above by a preferred embodiment. However, persons skilled in the art should understand that the preferred embodiment is illustrative of the present invention only, but should not be interpreted as restrictive of the scope of the present invention. Hence, changes or replacements of the other equivalent elements should fall within the appended claims of the present invention.

## Claims

1. A mid-axle positioning mechanism(130) for being disposed at a bottom bracket(110) of a bicycle and rotatably supporting a crank spindle(120) of the bicycle, the mid-axle positioning mechanism (130) comprising:
a first mount (140) disposed on a side of the bottom bracket(110) and having a first through hole(141) for insertion of the crank spindle(120) and a first free end(142);
a second mount (150) disposed on another side of the bottom bracket (110) and having a second through hole(151) for insertion of the crank spindle(120) and a second free end (152); and
a sleeve(160) disposed inside the bottom bracket(110) and sleeved onto the crank spindle(120), the sleeve(160) having a first end portion (161) and a second end portion (162) wherein the mid-axle positioning mechanism (130) is **characterized in that** the second free end (152) of the second mount (150) tapers and has a first annular oblique surface (153), the second end portion (162) of the sleeve (160) tapers and has a second annular oblique surface(163) complementing the first annular oblique surface(153), the first end portion (161) abuts against the first free end(142), and the second annular oblique surface(163) abuts against the first annular oblique surface(153) in a manner that friction between the second mount (150) and the sleeve (160) is greater than that between the first mount (140) and the sleeve (160).

2. The mid-axle positioning mechanism(130) of claim 1, wherein the second free end(152) of the second mount (150) has an inner surface(154) and an outer surface(155), wherein the first annular oblique surface(153) not only connects with the inner surface(154) but also tapers and extends in a direction away from an axis of the second mount (150).

3. The mid-axle positioning mechanism(130) of claim 1, wherein the sleeve(160) has an annular wall surface(165) defining a receiving space(166) for receiving the crank spindle(120), and the annular wall surface(165) has a via hole(167) in communication with the receiving space(166) and an outside.

4. A bicycle mid-axle structure (100), comprising:
a bottom bracket (110) having a first lateral opening (111) and a second lateral opening (112);
a crank spindle(120) rotatably penetrating the bottom bracket (110);
a mid-axle positioning mechanism(130) disposed at the bottom bracket (110), rotatably supporting the crank spindle(120), comprising:
a first mount (140) disposed at the first lateral opening (111) of the bottom bracket(20) and having a first through hole(141) for insertion of the crank spindle(120) and a first free end(142);
a second mount (150) disposed at the second lateral opening (112) of the bottom bracket (110) and having a second through hole(151) for insertion of the crank spindle(120) and a second free end(152); and
a sleeve(160) disposed inside the bottom bracket (110) and sleeved onto the crank spindle(120), the sleeve(160) having a first end portion (161) and a second end portion (162),;
a first bearing(170) disposed between the first mount (140) and the crank spindle(120); and
a second bearing(180) disposed between the second mount (150) and the crank spindle(120);
wherein the bicycle mid-axle structure (100) is **characterized in that** the second free end(152) of the second mount (150) tapers and has a first annular oblique surface (153), the second end portion (162) of the sleeve (160) tapers and has a second annular oblique surface (163) complementing the first annular oblique surface(153), the first end portion (161) abuts against the first free end (142), and the second annular oblique surface(163) abuts against the first annular oblique surface(153) in a manner that friction between the second mount (150) and the sleeve (160) is greater than that between the first mount (140) and the sleeve (160).

5. The bicycle mid-axle structure (100) of claim 4, wherein the second free end(152) of the second mount (150) has an inner surface(154) and an outer surface(155), and the first annular oblique surface(153) not only connects with the inner surface(154) but also tapers and extends in a direction away from an axis of the second mount (150).

6. The bicycle mid-axle structure(100) of claim 4, wherein the sleeve(160) has an annular wall surface(165) defining a receiving space(166) for receiving the crank spindle(120), and the annular wall surface(165) has a via hole(167) in communication with the receiving space(166) and an outside, wherein the bottom bracket(110) has a penetration hole (113) corresponds in position to the via hole(167).

## Patentansprüche

1. Mittelachsen-Positionierungsmechanismus (130) zur Anordnung an einem Tretlager (110) eines Fahrrads und zum drehbaren Halten einer Kurbelachse (120) des Fahrrads, worin der Mittelachsen-Positionierungsmechanismus (130) umfasst:
eine erste Befestigung (140), die an einer Seite des Tretlagers (110) angeordnet ist und ein erstes Durchgangsloch (141) zur Insertion der Kurbelachse (120) und ein erstes freies Ende (142) aufweist;
eine zweite Befestigung (150), die an einer anderen Seite des Tretlagers (110) angeordnet ist und ein zweites Durchgangsloch (151) zur Insertion der Kurbelachse (120) und ein zweite freies Ende (152) aufweist; und
eine Buchse (160), die in dem Tretlager (110) angeordnet und auf die Kurbelachse (120) aufgezogen ist, worin die Buchse (160) einen ersten Endbereich (161) aufweist und einen zweiten Endbereich (162), worin der Mittelachsen-Positionierungsmechanismus (130) **dadurch gekennzeichnet ist, dass** sich das zweite freie Ende (152) der zweiten Befestigung (150) verjüngt und eine erste ringförmige schräge Fläche (153) aufweist, worin sich der zweite Endbereich (162) der Buchse (160) verjüngt und eine zweite ringförmige schräge Fläche (163) aufweist, die komplementär ist zu der ersten ringförmigen schrägen Fläche (153), worin der erste Endbereich (161) auf dem ersten freien Ende (142) aufliegt, und worin die zweite ringförmige schräge Fläche (163) auf der ersten ringförmigen schrägen Fläche (153) aufliegt, so dass die Reibung zwischen der zweiten Befestigung (150) und der Buchse (160) größer ist als die zwischen der ersten Befestigung (140) und der Buchse (160).

2. Mittelachsen-Positionierungsmechanismus (130) nach Anspruch 1, worin das zweite freie Ende (152) der zweiten Befestigung (150) eine innere Fläche (154) und eine äußere Fläche (155) aufweist, worin die erste ringförmige schräge Fläche (153) nicht nur mit der innerer Fläche (154) in Verbindung steht, sondern sich auch verjüngt und sich in eine Richtung weg von einer Achse der zweite Befestigung (150) erstreckt.

3. Mittelachsen-Positionierungsmechanismus (130) nach Anspruch 1, worin die Buchse (160) eine ringförmig Wandfläche (165) aufweist, die einen Aufnahmeraum (166) definiert, um die Kurbelachse (120) aufzunehmen, und worin die ringförmig Wandfläche (165) ein Loch (167) aufweist, das mit dem Aufnahmeraum (166) und einer Außenseite in Verbindung steht.

4. Fahrrad-Mittelachsenaufbau (100), welcher umfasst:
ein Tretlager (110) mit einer ersten seitliche Öffnung (111) und einer zweiten seitlichen Öffnung (112);
eine Kurbelachse (120), die drehbar durch das Tretlager (110) verläuft;
ein Mittelachsen-Positionierungsmechanismus (130), der an dem Tretlager (110) angeordnet ist, und die Kurbelachse (120) drehbar trägt, welches umfasst:
eine erste Befestigung (140), die an der ersten seitlichen Öffnung (111) des Tretlagers (20) angeordnet ist und ein erstes Durchgangsloch (141) zur Insertion der Kurbelachse (120) und ein erstes freies Ende (142) aufweist;
eine zweite Befestigung (150), die an der zweiten seitlichen Öffnung (112) des Tretlagers (110) angeordnet ist und ein zweites Durchgangsloch (151) zur Insertion der Kurbelachse (120) aufweist und ein zweites freies Ende (152); und
eine Buchse (160), die in dem Tretlager (110) angeordnet ist und auf die Kurbelachse (120) aufgezogen ist, worin die Buchse (160) einen ersten Endbereich (161) und einen zweiten Endbereich (162) aufweist;
ein erstes Lager (170), das zwischen der ersten Befestigung (140) und der Kurbelachse (120) angeordnet ist; und
ein zweites Lager (180), das zwischen der zweiten Befestigung (150) und der Kurbelachse (120) angeordnet ist;
worin der Fahrrad-Mittelachsenaufbau (100) **dadurch gekennzeichnet ist, dass** sich das zweite freie Ende (152) der zweite Befestigung (150) verjüngt und eine erste ringförmige schräge Fläche (153) aufweist, worin sich der zweite Endbereich (162) der Buchse (160) verjüngt und eine zweite ringförmige schräge Fläche (163) aufweist, die komplementär ist zu der ersten ringförmigen schrägen Fläche (153), worin der erste Endbereich (161) auf dem ersten freien Ende (142) aufliegt, und die zweite ringförmige schräge Fläche (163) auf der ersten ringförmigen schrägen Fläche (153) aufliegt, so dass die Reibung zwischen der zweiten Befestigung (150) und der Buchse (160) größer ist als die zwischen der ersten Befestigung (140) und der Buchse (160).

5. Fahrrad-Mittelachsenaufbau (100) nach Anspruch 4, worin das zweite freie Ende (152) der zweiten Befestigung (150) eine innere Fläche (154) und eine äußere Fläche (155) aufweist, und die erste ringförmige schräge Fläche (153) nicht nur mit der inneren Fläche (154) verbunden ist, sondern sich auch verjüngt und sich in eine Richtung weg von einer Achse der zweiten Befestigung (150) erstreckt.

6. Fahrrad-Mittelachsenaufbau (100) nach Anspruch 4, worin die Buchse (160) eine ringförmige Wandfläche (165) aufweist, die einen Aufnahmeraum (166) zur Aufnahme der Kurbelachse (120) definiert, und worin die ringförmige Wandfläche (165) ein Durchgangsloch (167), das mit dem Aufnahmeraum (166) in Verbindung steht, und eine Außenseite aufweist, worin das Tretlager (110) ein durchgehendes Loch (113) aufweist, das hinsichtlich seiner Position dem Durchgangsloch (167) entspricht.

## Revendications

1. Mécanisme de positionnement de mi-axe (130) destiné à être disposé sur un pédalier (110) d'un vélo et supportant en rotation un axe de manivelle (120) du vélo, le mécanisme de positionnement de mi-axe (130) comprenant :
un premier montage (140) disposé sur un côté du pédalier (110) et présentant un premier trou traversant (141) pour l'insertion de l'axe de manivelle (120), et une première extrémité libre (142) ;
un second montage (150) disposé sur un autre côté du pédalier (110) et présentant un second trou traversant (151) pour l'insertion de l'axe de manivelle (120), et une seconde extrémité libre (152) ; et
un manchon (160) disposé à l'intérieur du pédalier (110) et manchonné sur l'axe de manivelle (120), le manchon (160) présentant une première partie d'extrémité (161) et une seconde partie d'extrémité (162),
dans lequel le mécanisme de positionnement de mi-axe (130) est **caractérisé**
**en ce que** la seconde extrémité libre (152) du second montage (150) termine en biseau et présente une première surface oblique annulaire (153), la seconde partie d'extrémité (162) du manchon (160) termine en biseau et présente une seconde surface oblique annulaire (163) complétant la première surface oblique annulaire (153), la première partie d'extrémité (161) est adjacente à la première extrémité libre (142), et la seconde surface oblique annulaire (163) est adjacente à la première surface oblique annulaire (153) de telle façon que le frottement entre le second montage (150) et le manchon (160) est supérieur à celui entre le premier montage (140) et le manchon (160).

2. Mécanisme de positionnement de mi-axe (130) selon la revendication 1, dans lequel la seconde extrémité libre (152) du second montage (150) présente une surface intérieure (154) et une surface extérieure (155), dans lequel la première surface oblique annulaire (153) se raccorde non seulement à la surface intérieure (154) mais est également conique et s'étend dans une direction s'éloignant d'un axe du second montage (150).

3. Mécanisme de positionnement de mi-axe (130) selon la revendication 1, dans lequel le manchon (160) présente une surface de paroi annulaire (165) définissant un espace de réception (166) pour recevoir l'axe de manivelle (120), et la surface de paroi annulaire (165) présente un trou de liaison (167) en communication avec l'espace de réception (166) et un extérieur.

4. Structure de mi-axe (100) de vélo, comprenant
un pédalier (110) ayant une première ouverture latérale (111) et une seconde ouverture latérale (112) ;
un axe de manivelle (120) pénétrant le pédalier (110) en rotation ;
un mécanisme de positionnement de mi-axe (130) destiné à être disposé sur le pédalier (110), et supportant en rotation l'axe de manivelle (120), comprenant :
un premier montage (140) disposé sur la première ouverture latérale (111) du pédalier (110) et présentant un premier trou traversant (141) pour l'insertion de l'axe de manivelle (120) et une première extrémité libre (142) ;
un second montage (150) disposé sur la seconde ouverture latérale (112) du pédalier (110) et présentant un second trou traversant (151) pour l'insertion de l'axe de manivelle (120) et une seconde extrémité libre (152) ; et
un manchon (160) disposé à l'intérieur du pédalier (110) et manchonné sur l'axe de manivelle (120), le manchon (160) présentant une première partie d'extrémité (161) et une seconde partie d'extrémité (162) ;
un premier palier (170) disposé entre le premier montage (140) et l'axe de manivelle (120) ; et
un second palier (180) disposé entre le second montage (150) et l'axe de manivelle (120) ;
dans lequel la structure de mi-axe (100) de vélo est **caractérisée en ce que** la seconde extrémité libre (152) du second montage (150) termine en biseau et présente une première surface oblique annulaire (153), la seconde partie d'extrémité (162) du manchon (160) termine en biseau et présente une seconde surface oblique annulaire (163) complétant la première surface oblique annulaire (153), la première partie d'extrémité (161) est adjacente à la première extrémité libre (142), et la seconde surface oblique annulaire (163) est adjacente à la première surface oblique annulaire (153) de telle façon que le frottement entre le second montage (150) et le manchon (160) est supérieur à celui entre le premier montage (140) et le manchon (160).

5. Structure de mi-axe (100) de vélo selon la revendication 4, dans laquelle la seconde extrémité libre (152) du second montage (150) présente une surface intérieure (154) et une surface extérieure (155), dans lequel la première surface oblique annulaire (153) se raccorde non seulement à la surface intérieure (154) mais est également conique et s'étend dans une direction s'éloignant d'un axe du second montage (150).

6. Structure de mi-axe (100) de vélo selon la revendication 4, dans laquelle le manchon (160) présente une surface de paroi annulaire (165) définissant un espace de réception (166) pour recevoir l'axe de manivelle (120), et la surface de paroi annulaire (165) présente un trou de liaison (167) en communication avec l'espace de réception (166) et un extérieur, dans laquelle le pédalier (110) présente un trou de pénétration (113) qui correspond en position au trou de liaison (167).
